(19) Europäisches Patentamt
European Patent Office
Office européen des brevets

(11) Veröffentlichungsnummer: **0 004 069**
**B1**

(12) # EUROPÄISCHE PATENTSCHRIFT

(45) Veröffentlichungstag der Patentschrift: **05.08.81**

(51) Int. Cl.³: **C 08 G 18/10**, C 08 G 18/32, C 09 D 3/72, D 06 M 15/52

(21) Anmeldenummer: **79100677.8**

(22) Anmeldetag: **07.03.79**

(54) **Verfahren zur Herstellung von wässrigen Lösungen oder Dispersionen von Polyurethanen sowie ihre Verwendung zur Herstellung von Überzügen, Lacken oder Beschichtungen.**

(30) Priorität: **15.03.78 DE 2811148**

(43) Veröffentlichungstag der Anmeldung: **19.09.79 Patentblatt 79/19**

(45) Bekanntmachung des Hinweises auf die Patenterteilung: **05.08.81 Patentblatt 81/31**

(84) Benannte Vertragsstaaten: **BE CH DE FR GB IT NL SE**

(56) Entgegenhaltungen:
**EP-A-0 000 029**
**GB-A-1 064 841**

(73) Patentinhaber: **BAYER AG, Zentralbereich Patente, Marken und Lizenzen, D-5090 Leverkusen 1, Bayerwerk (DE)**

(72) Erfinder: **Nachtkamp, Klaus, Dr., Im Odinshof 17, D-5060 Bergisch-Gladbach (DE)**
Erfinder: **Pedain, Josef, Dr., Haferkamp 6, D-5000 Köln 80 (DE)**
Erfinder: **Grammel, Jürgen, Dr., Mörickestrasse 22, D-4047 Dormagen 5 (DE)**

**EP 0 004 069 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von wässrigen Lösungen oder Dispersionen von Polyurethanen, sowie ihre Verwendung zur Herstellung von Überzügen, Lacken oder Beschichtungen

Verfahren zur Herstellung von stabilen, wässrigen Polyurethan-Polyharnstoff-Dispersionen nach dem Prinzip des Einbaus hydrophiler Zentren (sog. innerer Emulgatoren) in die makromolekulare Kette des Polymeren sind bekannt (z.B. DE-PS 1 184 946, DE-PS 1 178 586, DE-AS 1 237 306, DE-OSen 1 495 745, 1 595 602, 1 770 068, 2 019 324, vgl. auch D. Dieterich et al., Angew. Chem. 82, 53 [1970]).

Dabei ist zu unterscheiden zwischen solchen Verfahren, die auf die Mitverwendung organischer Lösungsmittel beim Aufbau der Polyurethan-Polyharnstoffe angewiesen sind und den sog. lösungsmittelfreien Herstellungsverfahren.

Im ersteren Falle werden hochmolekulare Polyurethane durch Polyaddition in organischer Lösung, also in homogener Phase, aufgebaut, bevor sie in Wasser dispergiert werden.

Da der Festkörper der dispersen Teilchen ebenfalls in hohem Masse homogen ist, liefern solche Dispersionen besonders hochwertige Polyurethanfilme, die z.B. das für die Textilbeschichtung notwendige Werteniveau erreichen.

Dieses sehr weit entwickelte Verfahren, das sowohl anionische als auch kationische und nichtionische Emulgatorsegmente einschliesst, hat den Nachteil, dass das organische Lösungsmittel in einem aufwendigen Verfahren abdestilliert und rektifiziert werden muss. Hiermit verbunden ist eine schlechte Raum/Zeit-Ausbeute beim Herstellungsprozess. Ausserdem erhöht das organische Lösungsmittel als Reaktionsmedium die Explosions- und Brandgefahr in den Produktionsanlagen.

Ein weiterer Nachteil dieses Verfahrens ist es, dass die kettenverlängerten, also hochmolekularen Polyurethan-Polyharnstoffe in dem organischen Lösungsmittel (z.B. Aceton) gut löslich sein müssen, so dass vor der Dispergierung in Wasser eine homogene, möglichst konzentrierte, dabei jedoch nicht zu viskose organische Lösung vorliegt. Diese Voraussetzung ist jedoch vielfach bei solchen Polymeren nicht erfüllt, die besonders harte, hochschmelzende und lösungsmittelbeständige Überzüge liefern sollen, wie z.B. Polyurethan-Polyharnstoffe auf Basis von Diphenylmethandiisocyanaten mit einem hohen Gehalt an Harnstoff-Gruppierungen.

Unter den bekannt gewordenen lösungsmittelfreien Herstellungsverfahren für Polyurethan-Dispersionen ist zunächst das sog. Schmelzdispergierverfahren zu nennen (DE-OS 1 770 068 oder US-PS 3 756 992, D. Dieterich und H. Reiff, Angew. makromol. Chem. 76, 85 [1972]).

Bei diesem Verfahren wird ein mit ionischen Gruppen modifiziertes, endständige, acylierte Aminogruppen aufweisendes Oligourethan mittels Formaldehyd in das entsprechende endständige an acylierte Aminogruppen gebundene Methylolgruppen aufweisende Oligourethan überführt, welches dann durch Wärmebehandlung unter Kondensationsreaktion der endständigen reaktiven Methylolgruppen kettenverlängert wird. Diese Kettenverlängerungsreaktion kann in Gegenwart von Wasser stattfinden, so dass unmittelbar eine wässrige Dispersion eines Polyurethans entsteht. Dieses Verfahren eignet sich insbesondere zur Herstellung von kationisch modifizierten Polyurethanen bzw. zur Herstellung von anionischen Carboxylatgruppen aufweisenden Polyurethanen. Die erforderliche Kombination der Isocyanat-Polyadditionsreaktion mit der genannten Kettenverlängerungsreaktion über polykondensationsfähige an endständige Acylaminogruppen gebundene Methylolgruppen stellt einen im Vergleich zur bekannten Isocyanat-Polyaddition nach dem Präpolymerverfahren, bei welchem Isocyanatgruppen aufweisende Präpolymere mit den klassischen Kettenverlängerungsmitteln wie z.B. Wasser oder Diaminen, umgesetzt werden, erhöhten Aufwand dar. Dieser Aufwand konnte beim Verfahren der DE-OS 1 770 068 damit gerechtfertigt werden, dass es erstmals gelang, Polyurethan-Dispersionen ohne Zuhilfenahme von Spezialrührern und ohne Zuhilfenahme von Emulgatoren und ohne Zuhilfenahme von Lösungsmitteln herzustellen.

In DE-OS 2 446 440 wird ein weiteres Verfahren beschrieben, das die lösungsmittelfreie Herstellung von Polyurethanen in wässriger Dispersion betrifft. Danach wird ein Sulfonat- und NCO-Gruppen aufweisendes Präpolymer mit einer difunktionellen, gegenüber NCO-Gruppen reaktiven Verbindung während des Dispergiervorgangs, d.h. nach vorausgegangener Lösung des Kettenverlängerers im Dispergierwasser umgesetzt. Möglich ist auch ein Zusatz des Kettenverlängerers nach der Dispergierung des Präpolymers in Wasser.

Kennzeichnend für dieses Verfahren ist, dass der Aufbau zu einem hochmolekularen Polyurethanharnstoff in disperser, d.h. heterogener Phase erfolgt. Das Kettenverlängerungsmittel – Diamin, Wasser – befindet sich in der flüssigen Phase und dringt erst im Laufe einer bestimmten Zeit bis zur Mitte des dispergierten Teilchens vor. Es liegt auf der Hand, dass das Kettenverlängerungsmittel, d.h. das in Wasser gelöste Diamin zunächst in den äusseren Bereichen des dispergierten Teilchens abreagiert. Die Konzentration des Kettenverlängerers nimmt zum Zentrum des Teilchens stetig ab.

Es werden deshalb nach diesem Verfahren Dispersionen erhalten, deren Festkörperteilchen nicht homogen sind. Hieraus resultieren Polyurethanharnstoffe, die im Vergleich zu in homogener Lösung hergestellten Produkten geringere mechanische Festigkeit und teilweise verschlechterte Hydrolysebeständigkeit aufweisen.

Darüber hinaus ist es praktisch nicht möglich, nach dem genannten Verfahren hochkonzentrierte Dispersionen mit einem Festkörpergehalt von mehr als 40% herzustellen, da bei höheren Feststoffkonzentrationen die einzelnen dispergierten

Teilchen durch das im wesentlichen zwischen den Teilchen befindliche Kettenverlängerungsmittel zu grösseren Aggregaten verknüpft werden. Das führt zu sehr hohen, für die Verarbeitung ungeeigneten Viskositäten und sogar zu Verpastungen der wässrigen Dispersionen.

Aufgabe der vorliegenden Erfindung war es daher, ein lösungsmittelfreies bzw. lösungsmittelarmes Verfahren zur Verfügung zu stellen, das die Herstellung von Polyurethanen in wässriger Phase mit verbesserten Eigenschaften erlaubt, wobei die Verbesserung besonders dadurch erreicht werden sollte, dass der im flüssigen wässrigen Medium verteilte hochmolekulare Festkörper durch Polyaddition in möglichst homogener Phase erhalten wird.

Überraschenderweise wurde nun gefunden, dass sich qualitativ besonders hochwertige Polyurethane in wässriger Dispersion oder Lösung dadurch herstellen lassen, dass man NCO-endständige Präpolymere, die einen hydrophil machenden Rest oder/und einen externen Emulgator enthalten, vor der Dispergierung in Wasser mit einem Kettenverlängerungsmittel in zumindest teilweise blockierter Form, welches unter dem hydrolytischen Einfluss von Wasser Hydrazin bildet, vermischt und anschliessend das so erhaltene Gemisch mit Wasser vermischt. Eine weitere überraschende Beobachtung ist darin zu sehen, dass selbst bei Verwendung von NCO-Präpolymeren mit aromatisch gebundenen Isocyanatgruppen bei diesem Verfahren weitgehend oxidations- bzw. lichtbeständige Polyurethane erhalten werden.

Als unter dem hydrolytischen Einfluss von Wasser hydrazinbildende Verbindungen werden beim nachstehend näher beschriebenen erfindungsgemässen Verfahren Azine und/oder Hydrazone verwendet. Die Umsetzung von Isocyanaten mit Azinen ist bislang nur in der Weise bekanntgeworden, dass bei Temperaturen oberhalb 100°C Diels-Alder-ähnliche Addukte gebildet werden (DE-AS 1 044 405, s. auch: J.R. Bailey et al, J. Amer. Chem. Soc. 39, 279, 1322 [1917]). Im Falle der vorliegenden Erfindung setzen sich die Reaktanden jedoch unter der Einwirkung von Wasser bei solchen Temperaturen um, bei denen Azine in Abwesenheit von Wasser gegenüber Isocyanaten inert sind. Es ist daher eine unter Mitwirkung der Isocyanate ablaufende hydrolytische Spaltung der Hydrazongruppen anzunehmen, die insofern besonders überraschend ist, als Azine oder Hydrazone normalerweise nur im sauren Medium hydrolysiert werden (s. dazu: E.C. Gilbert, J. Amer. Chem. Soc. 51, 3394 [1929]).

Gegenstand der vorliegenden Erfindung ist somit ein Verfahren zur Herstellung von wässrigen Lösungen oder Dispersionen von Polyurethanen durch Umsetzung von chemisch eingebaute hydrophile Gruppierungen und/oder externe, nicht chemisch gebundene Emulgatoren enthaltenden, mindestens 2 freie Isocyanatgruppen aufweisenden Präpolymeren mit Kettenverlängerungsmitteln in wässriger Phase, dadurch gekennzeichnet, dass man das hydrophil modifizierte und/oder einen externen Emulgator enthaltende, Isocyanatgruppen aufweisende Präpolymer in Abwesenheit von Wasser mit Azinen und/oder Hydrazonen vermischt und anschliessend dieses Gemisch mit Wasser vermischt.

Gegenstand der vorliegenden Erfindung ist schliesslich auch die Verwendung der nach diesem Verfahren erhältlichen Lösungen oder Dispersionen zur Herstellung von Überzügen, Lakken oder Beschichtungen.

Ausgangsmaterialien für das erfindungsgemässe Verfahren sind mindestens 2 endständige Isocyanatgruppen aufweisende NCO-Präpolymere. Vorzugsweise werden difunktionelle NCO-Präpolymere eingesetzt. Vorzugsweise handelt es sich bei den beim erfindungsgemässen Verfahren einzusetzenden NCO-Präpolymeren um solche, welche eine oder mehrere ihre Löslichkeit bzw. Dispergierbarkeit in Wasser bedingende hydrophile Gruppierung(en) aufweisen. Es ist jedoch auch möglich, beim erfindungsgemässen Verfahren an sich hydrophobe NCO-Präpolymere einzusetzen, falls für ihre Löslichkeit bzw. Dispergierbarkeit in Wasser durch Mitverwendung von externen Emulgatoren Sorge getragen wird. Selbstverständlich ist es auch denkbar, die Hydrophilie von eingebaute hydrophile Gruppen enthaltenden NCO-Präpolymeren durch zusätzliche Mitverwendung von externen Emulgatoren zu erhöhen.

Aus diesen Darlegungen geht bereits hervor, dass der genaue chemische Aufbau der NCO-Präpolymeren beim erfindungsgemässen Verfahren nicht kritisch ist. Dies bedeutet insbesondere, dass zur Durchführung des erfindungsgemässen Verfahrens alle NCO-Präpolymeren geeignet sind, die bislang bereits bei der Herstellung von wässrigen Polyurethan-Dispersionen oder -lösungen zum Einsatz gelangten. Ihre Herstellung erfolgt nach bekannten Verfahren des Standes der Technik und ist beispielsweise in den DE-OSen 1 495 745, 1 495 847, 2 446 440, 2 340 512, der US-PS 3 479 310, den GB-PSen 1 158 088 oder 1 076 688 beschrieben.

Die Herstellung der beim erfindungsgemässen Verfahren bevorzugt einzusetzenden NCO-Präpolymeren mit chemisch eingebauten hydrophilen Gruppen geschieht in Analogie zu den Methoden, wie sie in den beispielhaft genannten Literaturstellen genannt sind. Ausgangsmaterialien zur Herstellung dieser NCO-Präpolymeren sind demzufolge

1. beliebige organische Polyisocyanate, vorzugsweise Diisocyanate der Formel

$$Q(NCO)_2$$

wobei Q für einen aliphatischen Kohlenwaserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat,

Hexamethylendiisocyanat, Dodecamethylendiisocyanat, 1,4-Diisocyanato-cyclohexan, 1-Isocyanato-3,3,5-trimethylisocyanatomethylcyclohexan, Isophorondiisocyanat, 4,4'-Diisocyanatodicyclohexylmethan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanatodiphenylmethan, 4,4'-Diisocyanato-diphenylpropan-(2,2), p-Xylylen-diisocyanat oder α,α,α', α'-Tetramethyl-m- oder -xylylendiisocyanat, sowie aus diesen Verbindungen bestehende Gemische.

Vorzugsweise werden beim erfindungsgemässen Verfahren aromatische Diisocyanate der oben beispielhaft genannten Art eingesetzt.

Es ist selbstverständlich auch möglich, beim erfindungsgemässen Verfahren die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden.

2. Beliebige organische Verbindungen mit mindestens zwei gegenüber Isocyanatgruppen reaktionsfähigen Gruppen, insbesondere insgesamt zwei Aminogruppen, Thiolgruppen, Carboxylgruppen und/oder Hydroxylgruppen aufweisende organische Verbindungen des Molekulargewichtsbereichs 62 bis 10 000, vorzugsweise 1000 bis 6000. Bevorzugt werden die entsprechenden Dihydroxyverbindungen eingesetzt. Die Mitverwendung von im Sinne der Isocyanat-Polyadditionsreaktion tri- oder höherfunktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck.

Vorzugsweise einzusetzende Hydroxylverbindungen sind die in der Polyurethan-Chemie an sich bekannten Hydroxypolyester, Hydroxypolyäther, Hydroxypolythioäther, Hydroxypolyacetale, Hydroxypolycarbonate und/oder Hydroxypolyesteramide. Die in Frage kommenden Hydroxylgruppen aufweisenden Polyester sind z.B. Umsetzunsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls z.B. durch Halogenatome, substituiert und/oder ungesättigt sein. Als Beispiele hierfür seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren aus Ölsäure, gegebenenfalls in Mischung mit monomeren Fettsäuren, Terephthalsäuredimethylester, Terephthalsäure-bis-glykolester. Als mehrwertige Alkohole kommen z.B. Äthylenglykol, Propylenglykol-(1,2) und-(1,3), Butylenglykol-(1,4) und-(2,3), Hexandiol-(1,6), Octandiol-(1,8), Neopentylglykol, Cyclohexandimethanol-(1,4-bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäss in Frage kommenden, vorzugsweise zwei Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Alkohole und Amine, z.B. Wasser, Äthylenglykol, Propylenglykol-(1,3) oder -(1,2), 4,4'-Dihydroxy-diphenylpropan, Anilin, hergestellt.

Auch durch Vinylpolymerisate modifizierte Polyäther, wie sie z.B. durch Polymerisation von Styrol, Acrylnitril in Gegenwart von Polyäthern entstehen (amerikanische Patentschriften 3 383 351, 3 304 273, 3 523 093, 3 110 695, deutsche Patentschrift 1 152 536), sind ebenfalls geeignet. Die anteilig gegebenenfalls mit zu verwendenden höherfunktionellen Polyäther entstehen in analoger Weise durch an sich bekannte Alkoxylierung von höherfunktionellen Startermolekülen z.B. Ammoniak, Äthanolamin, Äthylendiamin oder Sukrose.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den CO-Komponenten handelt es sich bei den Produkten um Polythiomischäther, Polythioätherester, Polythioätheresteramide.

Als Polyacetale kommen z.B. die aus Glykolen, wie Diäthylenglykol, Triäthylenglykol, 4,4'-Diäthoxy-diphenyldimethylmethan, Hexandiol und Formaldehyd herstellbaren Verbindungen in Frage. Auch durch Polymerisation cyclischer Acetale lassen sich erfindungsgemäss geeignete Polyacetale herstellen.

Als Hydroxylgruppen aufweisende Polycarbonate kommen solche der an sich bekannten Art in

Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol mit Diarylcarbonaten, z.B. Diphenylcarbonat oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Auch niedermolekulare Polyole können (mit)verwendet werden, wie z.B. Äthandiol, Propandiol-1,2 und-1,3, Butandiol-1,4 und -1,3, Pentandiole, Hexandiole, Trimethylolpropan, Hexantriole, Glycerin und Pentaerythrit.

Vertreter der genannten im erfindungsgemässen Verfahren zu verwendenden Polyisocyanat- und Hydroxyl-Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45 bis 71, beschrieben.

3. Chemisch fixierte hydrophile Gruppen aufweisende, vorzugsweise im Sinne der Isocyanat-Additionsreaktionen mono- und insbesondere difunktionelle Aufbaukomponenten der beispielhaft in den obengenannten Literaturstellen bezüglich der Herstellung von wässrigen Polyurethandispersionen oder -lösungen beschriebenen Art, d.h. beispielsweise ionische bzw. potentielle ionische Gruppen aufweisende Diisocyanate, Diamine oder Dihydroxyverbindungen bzw. Polyäthylenoxid-Einheiten aufweisende Diisocyanate oder Glykole. Zu den bevorzugten hydrophil modifizierten Aufbaukomponenten gehören insbesondere die Sulfonatgruppen aufweisenden aliphatischen Diole gemäss DE-OS 2446440, die kationischen oder auch anionischen einbaufähigen inneren Emulgatoren gemäss DE-OS 2651506 und auch die in dieser Patentanmeldung beschriebenen, monofunktionellen einbaufähigen Polyäther. Bei der Herstellung der NCO-Präpolymeren nach an sich bekannten Prinzipien des Standes der Technik werden die Reaktionspartner im allgemeinen in solchen Mengenverhältnissen eingesetzt, die einem Verhältnis von Isocyanatgruppen zu gegenüber NCO-reaktiven Wasserstoffatomen, vorzugsweise aus Hydroxylgruppen, von 1,05 bis 10, vorzugsweise von 1,1 bis 3, entsprechen.

Die Reihenfolge der Zugabe der einzelnen Reaktionspartner ist hierbei weitgehend beliebig. Man kann sowohl die Hydroxylverbindungen abmischen und dazu das Polyisocyanat zufügen oder auch zur Polyisocyanatkomponente das Gemisch der Hydroxylverbindungen oder die einzelnen Hydroxylverbindungen nach und nach eintragen.

Die Herstellung der NCO-Präpolymere erfolgt vorzugsweise in der Schmelze bei 30 bis 190°C, vorzugsweise bei 50 bis 120°C. Die Herstellung der Präpolymere kann selbstverständlich auch in Gegenwart von organischen Lösungsmitteln erfolgen, obwohl einer der Hauptvorteile des erfindungsgemässen Verfahrens gerade in dem möglichen Verzicht auf derartige Lösungsmittel zu sehen ist. Geeignete Lösungsmittel, die z.B. zur Viskositätserniedrigung besonders hochschmelzender Präpolymerer in Mengen bis zu 30 Gew.-%, bezogen auf Feststoff, eingesetzt werden können, wären z.B. Aceton, Methyläthylketon, Essigsäureäthylester, Dimethylformamid oder Cyclohexanon.

Die Art und Mengenverhältnisse der bei der Herstellung der NCO-Präpolymeren eingesetzten Ausgangsmaterialien werden im übrigen vorzugsweise so gewählt, dass die NCO-Präpolymeren

a) eine mittlere NCO-Funktionalität von 1,8 bis 2,2, vorzugsweise 2,

b) einen Gehalt an kationischen oder anionischen eingebauten Gruppen von 0 bis 100, vorzugsweise 0,1 bis 10 und insbesondere 0,5 bis 50 Milli-Äquivalent pro 100 g Feststoff,

c) einen Gehalt an seitenständig, endständig und/oder innerhalb der Hauptkette eingebauten, innerhalb eines Polyäthersegments vorliegenden Äthylenoxid-Einheiten von 0 bis 30, vorzugsweise 0,5 bis 30 und insbesondere 1 bis 20 Gew.-%, bezogen auf das Gesamtgewicht des Präpolymeren und

d) ein mittleres Molekulargewicht von 500 bis 10000, vorzugsweise 800 bis 4000 aufweisen.

Zu den bevorzugten NCO-Präpolymeren gehören, wie bereits dargelegt, solche, welche entweder ionische Gruppen der unter b) genannten Art, d.h. insbesondere $-COO^-$, $-SO_3^-$ oder $=N^+=$, oder nichtionische Gruppen der unter c) genannten Art oder sowohl ionische als auch nichtionische Gruppen der genannten Art aufweisen. Es ist jedoch auch möglich, beim erfindungsgemässen Verfahren NCO-Präpolymere einzusetzen, bei deren Herstellung keine der unter 3. genannten hydrophilen Aufbaukomponenten mitverwendet wurden, bei denen der Gehalt der oben unter b) bzw. c) genannten Gruppen somit 0 beträgt. Im Falle der Vewendung derartiger NCO-Präpolymerer, die im übrigen auch die oben unter a) und d) genannten Eigenschaften aufweisen, ist bei der Durchführung des erfindungsgemässen Verfahrens die Mitverwendung von externen Emulgatoren unerlässlich. Geeignete derartige Emulgatoren sind beispielsweise von R. Heusch in «Emulsionen», Ullmann, Band 10, Seiten 449–473, Weinheim 1975, beschrieben. Geeignet sind sowohl ionische Emulgatoren wie z.B. Alkali- und Ammoniumsalze von langkettigen Fettsäuren oder langkettigen Aryl(Alkyl)sulfonsäuren, als auch nichtionische Emulgatoren wie z.B. äthoxylierte Alkylbenzole mit einem mittleren Molgewicht von 500 bis 10000.

Diese externen Emulgatoren werden vor der Durchführung des erfindungsgemässen Verfahrens mit den NCO-Präpolymeren innig durchmischt. Sie gelangen im allgemeinen in Mengen von 1 bis 30, vorzugsweise 5 bis 20 Gew.-%, bezogen auf das Gewicht des NCO-Präpolymeren zum Einsatz. Es ist durchaus möglich, auch bei Verwendung von hydrophil modifizierten NCO-Präpolymeren, deren Hydrophilie durch zusätzliche Mitverwendung derartiger externer Emulgatoren zu erhöhen, obwohl dies im allgemeinen nicht erforderlich ist.

Neben den NCO-Präpolymeren werden beim erfindungsgemässen Verfahren Verbindungen eingesetzt, welche unter dem hydrolytischen Einfluss von Wasser Hydrazin bilden. Bei diesen Verbindungen handelt es sich um Umsetzungsprodukte von Hydrazin mit Carbonylverbindungen in einem Äquivalentverhältnis zwischen hydrazinischen $NH_2$-Gruppen und Carbonylgruppen von 1:1 bis 2:1. Bei diesen Verbindungen handelt es sich somit um Azine, d.h. Aldazine bzw. Ketazine oder um Hydrazone, d.h. Aldehydhydrazone oder Ketonhydrazone oder um beliebige Gemische derartiger Verbindungen. Die in den Azinen bzw. Hydrazonen vorliegende $>C=N-$ -Gruppe ist bei Raumtemperatur in Abwesenheit von Feuchtigkeit gegenüber Isocyanatgruppen weitgehend inert und reagiert erst bei Zutritt von Wasser, vermutlich unter intermediärer Freisetzung der hydrazinischen $-NH_2-$ Gruppe mit Isocyanatgruppen.

Aus der Tatsache, dass beim erfindungsgemässen Verfahren auch Hydrazone eingesetzt werden können, ist bereits ersichtlich, dass es zur Durchführung des erfindungsgemässen Verfahrens nicht notwendig ist, dass alle hydrazinischen $NH_2$-Gruppen blockiert sind. Wesentlich ist allein, dass in jedem Hydrazinmolekül mindestens eine $-NH_2$-Gruppe in blockierter Form vorliegt.

Die Herstellung der Ketazine, Aldazine, Ketonhydrazone und Aldehydhydrazone gehört zum bekannten Stand der Technik und ist beispielsweise in Houben-Weyl, Methoden der Organischen Chemie, Band X/2, 1967, Seiten 89-112 beschrieben.

Zur Herstellung der erfindungsgemäss einzusetzenden Azine und Hydrazone sind beliebige, mindestens eine Keton- bzw. Aldehyd-Gruppe aufweisende, ansonsten unter den Reaktionsbedingungen inerte organische Verbindung geeignet. Vorzugsweise werden jedoch aliphatische oder cycloaliphatische Aldehyde oder Ketone mit insgesamt 2 bis 18, bzw. im Falle der cycloaliphatischen Verbindungen 5 bis 18, vorzugsweise 3 bis 6, bzw. im Falle der cycloaliphatischen Verbindungen 5 bis 6 Kohlenstoffatome eingesetzt. Beispiele geeigneter Aldehyde bzw. Ketone sind Acetaldehyd, Propionaldehyd, Butyraldehyd, Isobutyraldehyd, Aceton, Methyläthylketon, Methylisobutylketon, Diisopropylketon, Cyclohexanon oder Cyclopentanon. Aromatische Aldehyde bzw. Ketone wie z.B. Benzaldehyd, Acetophenon oder Benzophenon sind ebenfalls geeignet, jedoch weniger bevorzugt.

Die bevorzugt beim erfindungsgemässen Verfahren einzusetzenden Azine bzw. Hydrazone entsprechen somit den Formeln

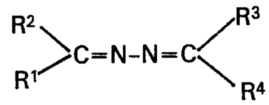

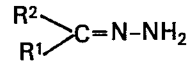

in welchen

$R^1$, $R^2$, $R^3$ und $R^4$ für gleiche oder verschiedene Reste stehen und Wasserstoff, aliphatische Kohlenwasserstoffreste mit einem bis 17, vorzugsweise 1 bis 5 Kohlenstoffatomen bedeuten, wobei die Reste $R^1$ und $R^2$ bzw. $R^3$ und $R^4$ jeweils zusammen mit dem Kohlenstoffatom des Grundgerüstes auch einen cycloaliphatischen Ring mit 5 bis 18, vorzugsweise 5 bis 6, Kohlenstoffatomen bilden können.

Die entsprechenden Keton-Derivate sind gegenüber den Aldehyd-Derivaten bevorzugt. Im Falle der Verwendung von Aldehyd-Derivaten kommen vor allem solche auf Basis von Aldehyden mit mindestens 4 Kohlenstoffatomen in Betracht.

Zur Durchführung des erfindungsgemässen Verfahrens werden die gegebenenfalls externen Emulgator enthaltenden NCO-Präpolymeren mit den genannten Azinen und/oder Hydrazonen vermischt. Das Mengenverhältnis zwischen NCO-Präpolymer und zumindest teilweise blockiertem Hydrazin wird hierbei im allgemeinen so gewählt, dass das Äquivalent-Verhältnis (NCO-Gruppen des Präpolymeren): (freie + blockierte hydrazinische $NH_2$-Gruppen) zwischen 4:1 und 1:1,5, vorzugsweise zwischen 2:1 und 1:1,25 und insbesondere zwischen 1,3:1 und 1:1,2 liegt. Die Abmischung der beiden Komponenten erfolgt in einem Temperaturbereich von -20 bis 100°C, vorzugsweise von 15 bis 60°C. Kommen besonders hochschmelzende NCO-Präpolymere zum Einsatz, die eine Durchmischung im bevorzugten Temperaturbereich nicht zulassen, so ist es selbstverständlich möglich, zur Viskositätserniedrigung organische Lösungsmittel zuzusetzen, wie z.B. Aceton, Methyläthylketon, Essigsäureäthylester, Dimethylformamid oder Cyclohexanon. Es muss dann jedoch nur so viel Lösungsmittel verwandt werden, wie zur Gewährleistung einer ausreichenden Rührbarkeit des NCO-Präpolymeren nötig ist und nicht, wie bei den früheren Verfahren, zur homogenen Auflösung des kettenverlängerten Polyurethans. Im allgemeinen genügen hier Lösungsmittelmengen bis zu 30 Gew.-%, bezogen auf den Feststoff des Präpolymeren.

Im Falle der Verwendung von Hydrazonen kann beim Vermischen mit dem NCO-Präpolymer zwischen NCO-Gruppen und $NH_2$-Gruppen eine Reaktion eintreten, die zu Temperatursteigerungen, jedoch nicht zu nennenswerten Viskositätserhöhungen führen kann. Es ist dennoch oft vorteilhaft, das NCO-Präpolymer erst kurz vor der Dispergierung in Wasser mit dem blockierten Hydrazin abzumischen. Selbstverständlich ist es möglich, bei dem erfindungsgemässen Verfahren neben den Azinen und/oder Hydrazonen auch andere blockierte Kettenverlängerer, wie z.B. Ketimine oder Aldimine mitzuverwenden.

Der nachfolgende Schritt des erfindungsgemässen Verfahrens besteht in dem Vermischen des Gemisches mit Wasser zur Herstellung der wässrigen Lösung bzw. Dispersion unter gleichzeitiger Hydrolyse des blockierten Hydrazins. Man benutzt für diesen Schritt so viel Wasser, dass die Lösung bzw. Dispersion einen möglichst hohen Festkörperanteil aufweist. Vorzugsweise lassen sich Lösungen bzw. Dispersionen mit 40 bis 60% Festkörper sehr gut herstellen. Weiteres Verdünnen mit Wasser ist ohne weiteres möglich. Das Wasser wird vorzugsweise in einem Guss oder je nach Belieben nach und nach zugegeben. Die Vermischung des Gemisches aus Präpolymer und blockiertem Hydrazin mit Wasser kann aber auch so erfolgen, dass das Gemisch in die wässrige Phase eingetragen wird oder dass nach einem kontinuierlichen Verfahren in geeigneten Mischaggregaten zunächst Präpolymer und blockiertes Hydrazin und dann Wasser miteinander vermischt werden. Man benutzt Wasser von 0 bis 90 °C, vorzugsweise von 15 bis 60 °C.

Die entstehenden Dispersionen sind sehr feinteilig, die Teilchen haben vorzugsweise eine Grösse von 20 bis 200 nm, können natürlich auch grösser sein.

In einem letzten Schritt können die nach dem erfindungsgemässen Verfahren hergestellten Dispersionen selbstverständlich noch weiter in bekannter Weise modifiziert werden. Wurde z.B. das Äquivalent-Verhältnis von NCO-Gruppen zu freien und blockierten hydrazinischen $NH_2$-Gruppen in dem Bereich von 1:1 bis 1:1,5 gewählt, so ist eine Modifizierung des mit endständigen Semicabazidgruppen versehenen Polyurethans möglich. Als Modifzierungsmittel kommen z.B. Mono- und Polyisocyanate, die auch in verkappter Form vorliegen können und Epoxid-Gruppen enthaltende chemische Verbindungen in Frage. Durch die nachträgliche Modifizierung der wässrigen Polyurethanharnstoffe können erwünschte Eigenschaften erzielt werden, wie z.B. eine Hydrophobierung durch die Umsetzung mit Stearylisocyanat.

Die Frage, ob beim erfindungsgemässen Verfahren Lösungen oder Dispersionen der Polyurethane in Wasser erhalten werden, ist vor allem vom Molekulargewicht und der Hydrophilie der gelösten bzw. dispergierten Teilchen abhängig, welche ihrerseits durch geeignete Wahl von Art und Mengenverhältnis der Ausgangsmaterialien, insbesondere bei der Herstellung der NCO-Präpolymeren nach den bekannten Prinzipien der Polyurethan-Chemie eingestellt werden können. So führt beispielsweise die Verwendung von einem NCO-Präpolymeren mit der geringfügig unter 2 liegenden mittleren NCO-Funktionalität zu einem Abbruch der Polyadditionsreaktion, bevor allzu hohe Molekulargewichte erreicht sind. Die nach dem erfindungsgemässen Verfahren hergestellten, in wässriger Dispersion bzw. Lösung vorliegenden Polyurethane sind den bekannten in organischen Lösungsmitteln hergestellten Polyurethanen ebenbürtig. Aus ihnen hergestellte Filme weisen eine ausgezeichnete mechanische Festigkeit und Hydrolysebeständigkeit auf und können für die verschiedensten Einsatzgebiete verwendet werden.

So eignen sich die erfindungsgemässen Dispersionen bzw. Lösungen in besonders guter Weise zur Herstellung von Klebstoffen und Beschichtungen, und zwar je nach Art und Aufbau des Polyurethans sowohl für flexible als auch für nicht flexible Substrate. Besonders bevorzugte Einsatzgebiete auf dem Sektor der flexiblen Substrate sind die Textilbeschichtung, die Lederzurichtung, die Papierbeschichtung sowie die Verwendung als Glasfaserschichten. Zur Beschichtung von nicht flexiblen Substraten lassen sich nach dem erfindungsgemässen Verfahren harte und widerstandsfähige Überzüge herstellen, die zum Beispiel als Lacke für Holz oder Metalle geeignet sind, gegebenenfalls unter nachträglicher Vernetzung mit Formaldehyd-, Harnstoff- und Melaminharzen. Weiterhin eignen sich die erfindungsgemässen Dispersionen zur Abmischung mit wässrigen Polyacrylat-Dispersionen und können als solche für die oben angegebenen Einsatzgebiete verwandt werden.

Die in den nachstehenden Beispielen gemachten Prozentangaben beziehen sich, soweit nicht anders vermerkt, auf Gewichtsprozente.

Beispiel 1

Ansatz:

| | |
|---|---|
| 1479 g | Adipinsäure-Diäthylenglykol-Polyester (Molekulargewicht: 2550) |
| 200 g | Polypropylenoxid-Polyäther, gestartet auf Propandiol-1,2 (Molekulargewicht: 1000) |
| 85,8 g | Polyäther aus 15% Propylenoxid und 85% Äthylenoxid, gestartet auf n-Butanol (Molekulargewicht: 2145) |
| 85,0 g | propoxyliertes Addukt aus 2-Butendiol-1,4 und $NaHSO_3$ (Molekulargewicht: 425) |
| 9,3 g | p-Toluolsulfonsäuremethylester |
| 313,2 g | Diisocyanatotoluol (Gemisch aus 80% des 2,4- und 20% des 2,6-Isomeren) |
| 71,7 g | Acetonazin (Bis-isopropyliden-hydrazin) |
| 3290 g | entionisiertes Wasser |

Durchführung:

Zu dem bei 120 °C entwässerten Gemisch aus dem Polyester, den beiden Polyäthern und dem Bisulfitaddukt gibt man den p-Toluolsulfonsäuremethylester (zur Bindung von evtl. im Bisulfitaddukt vorhandenem Alkali) und gibt dann bei 60 °C das Diisocyanatotoluol zu. Man rührt bei 80 °C, bis ein NCO-Wert von 3,1% erreicht ist. Dann lässt man auf 50 °C abkühlen und rührt in die mässig viskose Präpolymer-Schmelze das Acetonazin

ein, wobei die Temperatur leicht abfällt und die Viskosität weiter abnimmt. Unter gutem Rühren lässt man jetzt das Wasser zulaufen und rührt 2 Stunden nach. Die entstandene Dispersion hat einen Feststoffgehalt von 40% und eine Fordbecherviskosität (4 mm-Düse) von 18 Sekunden. Die Dispersion zeigt im durchscheinenden Licht einen Tyndal-Effekt.

Die Dispersion trocknet zu klaren, weichen, elastischen Filmen. Sie ist als Haftstrich bei der Beschichtung von flexiblen Substraten geeignet. Verklebung von Polyurethan-Deckstrichen mit der nach Beispiel 1 hergestellten Dispersion liefert Textilbeschichtungen mit weichem Griff und sehr guter Wasch- und Reinigungsbeständigkeit. Darüber hinaus eignet sich die Dispersion als Grundierung zur Lederzurichtung.

Beispiel 2

Es wird ein Präpolymer gemäss Beispiel 1 hergestellt. Nach Abkühlen auf 50°C rührt man 89,6 g Methyläthylketazin ein und dispergiert dann wie in Beispiel 1 beschrieben. Die entstandene Dispersion ist dünnflüssig und zeigt einen Tyndall-Effekt.

Beispiel 3

Es wird ein Präpolymer gemäss Beispiel 1 hergestellt: Nach Abkühlen auf 50°C rührt man 89,6 g Isobutyraldazin ein und dispergiert dann wie in Beispiel 1 beschrieben. Die entstandene Dispersion ist dünnflüssig und zeigt einen Tyndal-Effekt.

Beispiel 4

Es wird ein Präpolymer gemäss Beispiel 1 hergestellt. Nach Abkühlen auf 50°C tropft man 46,1 g Acetonhydrazon innerhalb von 30 Minuten zu, wobei Temperatur und Viskosität geringfügig ansteigen, ohne dass jedoch die Gefahr einer Gelierung besteht.

Anschliessend wird wie in Beispiel 1 beschrieben dispergiert. Die entstandene Dispersion hat eine Fordbecherviskosität (4 mm-Düse) von 17 Sekunden und zeigt im durchscheinenden Licht einen Tyndal-Effekt. Die Dispersion trocknet zu Filmen auf, die in ihren Eigenschaften dem nach Beispiel 1 hergestellten Produkt entsprechen.

Beispiel 5

Ansatz:

| | |
|---|---|
| 1710 g | Adipinsäure-Butandiol-Polyester (MG: 2250) |
| 85,5 g | Polyäther aus 15% Propylenoxid und 85% Äthylenoxid, gestartet auf n-Butanol (MG: 2145) |
| 93,5 g | propoxyliertes Addukt aus 2-Butendiol-1,4 und $NaHSO_3$ (MG: 425) |
| 600 g | Aceton |
| 550 g | 4,4'-Diisocyanatodiphenylmethan |
| 125,2 g | Acetonazin |
| 3700 g | entionisiertes Wasser |

Durchführung:

Zu einem bei 120°C entwässerten Gemisch aus dem Polyester, dem Polyäther und dem Bisulfit-Addukt gibt man zur Viskositätserniedrigung des zu bildenden Präpolymers 60 g wasserfreies Aceton. Anschliessend gibt man das 4,4'-Diisocyanatodiphenylmethan zu und rührt bei 60°C, bis ein NCO-Wert von 3,3% erreicht ist. Das so erhaltene Präpolymer wird auf 20°C abgekühlt. Dann wird das Acetonazin zugegeben, wobei keinerlei Reaktion zwischen Azin und den Isocyanatgruppen zu beobachten ist. Unter gutem Rühren wird jetzt durch Zugiessen des Wassers dispergiert. Die entstandene Dispersion hat einen Acetongehalt von ca. 10%. Sie kann durch Vakuumdestillation vom Aceton befreit werden und besitzt danach einen Festkörpergehalt von 40%. Die Fordbecherviskosität (4 mm -Düse) beträgt 14 Sekunden. Die Dispersion zeigt im durchscheinenden Licht einen Tyndall-Effekt.

Die Dispersion ist als Deckstrich zur Beschichtung von flexiblen Substraten geeignet, insbesondere zur Textilbeschichtung.

Sie trocknet zu klaren, farblosen, elastischen Filmen, die durch gute mechanische Eigenschaften, Hydrolysefestigkeit und eine gegenüber herkömmlichen Polyurethanen auf Basis aromatischer Isocyanate deutlich verbesserte Resistenz gegen UV-Bestrahlung gekennzeichnet sind und beim Erhitzen (z.B. 10 Minuten, 150°C) nicht vergilben.

| | Anfangswert | nach 14 d Hydrolysetest | nach 400 h Xenotest |
|---|---|---|---|
| Zugfestigkeit (DIN 53504) | 38,0 MPa | 37,5 MPa | 21,7 MPa |
| Bruchdehnung (DIN 53504) | 520% | 440% | 250% |

Die Restfestigkeit nach 400 h Belichtung im Xenotest beträgt ca. 57% des Anfangswertes.

Beispiel 6 (Vergleichsbeispiel)

Ein nach dem Stand der Technik in 35%iger Dimthylformamid/Toluol-Lösung hergestelltes Polyurethan aus 2250 g Adipinsäure-Butandiol-Polyester (MG: 2550), 216 g Butandiol-1,4 und 850 g 4,4'-Diisocyanatodiphenylmethan liefert Filme mit den folgenden Eigenschaften:

| | Anfangswert | nach 14 d Hydrolysetest | nach 400 h Xenotest |
|---|---|---|---|
| Zugfestigkeit (DIN 53504) | 44,8 MPa | 44,0 MPa | 4,0 MPa |
| Bruchdehnung (DIN 53504) | 660% | 570% | 300% |

Die Restfestigkeit der Filme nach 400 h Belichtung im Xenotest beträgt weniger als 10% des Anfangswertes.

Beispiel 7

Ansatz:

| | |
|---|---|
| 558 g | Adipinsäure-Butandiol-Polyester (Molekulargewicht: 900) |
| 42,5 g | Polyäther aus 15% Propylenoxid und 85% Äthylenoxid, gestartet auf n-Butanol (Molekulargewicht: 2145) |
| 29,8 g | propoxyliertes Addukt aus 2-Butendiol-1,4 und $NaHSO_3$ (Molekulargewicht: 425) |
| 300 g | Aceton |
| 450 g | 4,4'-Diisocyanatodiphenylmethan |
| 27 g | Butandiol-1,4 |
| 71,7 g | Acetonazin |
| 1690 g | entionisiertes Wasser |

Durchführung:

Zu einem bei 120 °C entwässerten Gemisch aus dem Polyester, dem Polyäther und dem Bisulfit-Addukt gibt man zur Viskositätserniedrigung des zu bildenden Präpolymers 300 g wasserfreies Aceton. Anschliessend gibt man das 4,4'-Diisocyanatodiphenylmethan zu und rührt bei 60 °C, bis ein NCO-Wert von 6,7% erreicht ist. Nach Zugabe des Butandiols lässt man das Gemisch bei der gleichen Temperatur bis zu einem NCO-Wert von 4,8% weiterreagieren. Das so erhaltene Präpolymer wird auf 20 °C abgekühlt. Dann wird das Acetonazin zugegeben, wobei keinerlei Reaktion zwischen Azin und den Isocyanatgruppen zu beobachten ist. Unter gutem Rühren wird jetzt durch Zugiessen des Wassers dispergiert. Die entstandene Dispersion hat einen Acetongehalt von ca. 10%. Sie kann durch Vakuumdestillation von Aceton befreit werden und besitzt danach einen Festkörpergehalt von 40%. Die Fordbecherviskosität (4 mm-Düse) beträgt 15 Sekunden. Die Dispersion zeigt im durchscheinenden Licht einen Tyndall-Effekt.

Die Dispersion ist zur Beschichtung von flexiblen Substraten geeignet. Sie trocknet zu klaren, farblosen, elastischen Filmen, die auch bei erhöhter Temperatur (z.B. 150 °C, 10 Minuten) nicht vergilben. Das Polymere ist durch einen hohen Schmelzpunkt (ca. 220 °C), Hydrolysefestigkeit und eine gegenüber herkömmlichen Polyurethanen auf Basis aromatischer Isocyanate deutlich verbesserte Resistenz gegen UV-Bestrahlung gekennzeichnet.

| | Anfangswert | nach14 d Hydrolysetest | nach 400 h Xenotest |
|---|---|---|---|
| Zugfestigkeit (DIN 53504) | 34,7 MPa | 33,5 MPa | 18,7 MPa |
| Bruchdehnung (DIN 53504) | 310% | 260% | 160% |

Die Restfestigkeit nach 400 h Belichtung im Xenotest beträgt ca. 54% des Anfangswertes.

Beispiel 8

Es wird eine Dispersion gemäss Beispiel 7 hergestellt, jedoch unter Verwendung von nur 920 g Wasser. Nach Abdestillieren des Acetons resultiert ein Festkörpergehalt von 5%. Die Dispersion besitzt eine Fordbecherviskosität (4 mm-Düse) von 56 Sekunden und zeigt einen deutlichen Tyndall-Effekt. Sie ist über einen Zeitraum von mehr als 5 Monaten lagerstabil.

Beispiel 9

Es wird ein Präpolymer gemäss Beispiel 7 hergestellt. Nach Abkühlen auf 20 °C tropft man innerhalb von 30 Minuten 46,1 g Acetonhydrazon zu, wobei Temperatur und Viskosität geringfügig ansteigen, ohne dass jedoch die Gefahr einer Gelierung besteht. Anschliessend wird wie in Beispiel 7 beschrieben dispergiert. Nach Abdestillieren des Acetons resultiert ein Festkörpergehalt von 40%. Die Fordbecherviskosität (4 mm-Düse) beträgt 21 Sekunden. Die Dispersion zeigt im durchscheinenden Licht einen Tyndall-Effekt. Sie trocknet zu Filmen auf, die in ihren Eigenschaften dem nach Beispiel 7 hergestellten Produkt entsprechen.

Beispiel 10 (Vergleichsbeispiel)

Es wird ein Präpolymer gemäss Beispiel 7 hergestellt. Nach Abkühlen auf 20 °C gibt man 125 g eines im Molverhältnis 1:2 hergestellten Gemisches aus Hydrazinhydrat und Aceton zu. Die Mischung lässt sich zunächst klar einrühren; nach kurzer Zeit erfolgt jedoch eine exotherme Reaktion unter Eintrübung und Viskositätsanstieg. Nach ca. 5 bis 120 Minuten ist das Produkt völlig geliert. Dispergiert man mit Wasser, bevor die Gelierung eintritt, so erhält man eine grobteilige Dispersion ohne Tyndall-Effekt, die beim Stehen sedimentiert.

Das Beispiel zeigt, dass es zur Durchführung des erfindungsgemässen Verfahrens erforderlich ist, wasserfreie Azine oder Hydrazone einzusetzen.

Beispiel 11 (Vergleichsbeispiel)

Es wird ein Präpolymer gemäss Beispiel 7 hergestellt. Nach Abkühlen auf 20 °C gibt man 1400 g Aceton zu und lässt dann 32 g Hydrazinhydrat in die gut gerührte Lösung eintropfen. Das anfangs klare Produkt wird dabei zunehmend trübe und inhomogen, bleibt jedoch gut rührbar. Man dispergiert mit Wasser wie in Beispiel 8 beschrieben und destilliert das Aceton im Vakuum ab. Die resultierende Dispersion ist grobteilig und sedimentiert in kurzer Zeit vollständig.

Das Beispiel zeigt, dass mit Hilfe des klassischen «Acetonverfahrens» Dispersionen solcher Polyurethan-Polyharnstoffe nicht zugänglich sind, die z.B. aufgrund ihres hohen Diisocyanatodiphenylmethan-Gehaltes in Aceton unlöslich sind und daher bei der Kettenverlängerung ausfallen. Das erfindungsgemässe, auf der Verwendung von Azinen basierende Verfahren ermöglicht dagegen die Herstellung solcher Dispersionen (s. Beispiel 7).

Beispiel 12

Ansatz:

| | |
|---|---|
| 400 g | Phthalsäure-Äthandiol-Polyester (Molekulargewicht: 2000) |
| 1050 g | Phthalsäure-Adipinsäure-Äthandiol-Polyester (Molekulargewicht: 1750) |
| 85,5 g | Polyäther aus 15% Propylenoxid und 85% Äthylenoxid, gestartet auf n-Butanol (Molekulargewicht: 2145) |
| 76,6 g | propoxyliertes Addukt aus 2-Butandiol-1,4 und $NaHSO_3$ (Molekulargewicht: 425) |
| 500 g | Aceton |
| 550 g | 4,4'-Diisocyanatodiphenylmethan |
| 107,5 g | Acetonazin |
| 3290 g | entionisiertes Wasser |

Durchführung:

Das bei 120 °C entwässerte Gemisch aus den beiden Polyestern, dem Polyäther und dem Bisulfit-Addukt wird mit 500 g wasserfreiem Aceton verdünnt. Anschliessend gibt man das 4,4'-Diisocyanatodiphenylmethan zu und erhitzt unter Rühren auf 60 °C, bis ein NCO-Wert von 3,8% erreicht ist. Man kühlt auf 20 °C ab und rührt das Acetonazin ein. Unter gutem Rühren wird jetzt durch Zugiessen des Wassers dispergiert. Die entstandene Dispersion hat einen Acetongehalt von ca. 8%; sie kann durch Vakuumdestillatin vom Aceton befreit werden und besitzt danach einen Feststoffgehalt von 40%. Die Fordbecherviskosität (4 mm-Düse) beträgt 15 Sekunden. Die Dispersion zeigt im durchscheinenden Licht einen Tyndall-Effekt. Sie trocknet zu klaren, farblosen Filmen und ist zur Beschichtung von Papier geeignet. Pendelhärte: 90 Sekunden.

Die Filme zeigen nach 10-minütigem Erhitzen auf 150 °C keine Wärmevergilbung.

Beispiel 13

Ansatz:

| | |
|---|---|
| 306 g | Adipinsäure-Butandiol-Polyester (Molekulargewicht: 900) |
| 220 g | Polypropylenoxid-Polyäther, gestartet auf Bisphenol A (Molekulargewicht: 550) |
| 42,7 g | Polyäther aus 15% Propylenoxid und 85% Äthylenoxid, gestartet auf n-Butanol (Molekulargewicht: 2145) |
| 42,5 g | propoxyliertes Addukt aus 2-Butandiol-1,4 und $NaHSO_3$ (Molekulargewicht: 425) |
| 300 g | Aceton |
| 450 g | 4,4'-Diisocyanatodiphenylmethan |
| 13,4 g | Trimethylolpropan |
| 84,8 g | Acetonazin |
| 1650 g | entionisiertes Wasser |

Durchführung:

Zu einem bei 120 °C entwässerten Gemisch aus dem Polyester, den beiden Polyäthern und dem Bisulfit-Addukt gibt man zur Viskositätserniedrigung des zu bildenden Präpolymers 300 g wasserfreies Aceton. Anschliessend gibt man das 4,4'-Diisocyanatodiphenylmethan zu und rührt bei 60 °C, bis ein NCO-Wert von 5,8% erreicht ist. Nach Zugabe des Trimethylolpropans lässt man das Gemisch bei der gleichen Temperatur bis zu einem NCO-Wert von 4,9% weiterreagieren. Das so erhaltene Präpolymer wird auf 20 °C abgekühlt. Dann wird das Acetonazin zugegeben und es wird unter gutem Rühren durch Zugiessen des Wassers dispergiert. Die entstandene Dispersion hat einen Acetongehalt von ca. 10%; sie kann durch Vakuumdestillation vom Aceton befreit werden und besitzt danach einen Feststoffgehalt von 40%. Die Fordbecherviskosität (4 mm-Düse) beträgt 18 Sekunden. Die Dispersion zeigt im durchscheinenden Licht einen Tyndall-Effekt. Sie trocknet zu klaren, farblosen, harten Filmen und kann als lufttrocknender Holzlack eingesetzt werden:

Ein Buchenholzbrett wird mit der auf 20% festkörpergehaltverdünnten Dispersion als Einlassgrund behandelt. Nach 5-minütigem Trocknen bei 80 °C wird die Oberfläche in Faserrichtung geschliffen und anschliessend mit der unverdünnten Dispersion gestrichen. Nach Trocknung (2 Stunden bei Raumtemperatur) resultiert ein klarer, glänzender, trockener Lack, der den folgenden Tests unterworfen wird:

1. Ein mit Wasser getränkter Wattebausch wird 24 Stunden bei Raumtemperatur auf der lackierten Holzoberfläche gelagert, wobei eine Schutzkappe das Austrocknen verhindert. Die Lackoberfläche zeigt danach weder eine Erweichung noch eine Trübung noch sonstige Hydrolyseerscheinungen.

2. Der Test wird mit einer 50%igen wässrigen Äthylalkohol-Lösung wiederholt. Nach 24 Stunden ist eine geringfügige Trübung der Lackschicht zu erkennen, die jedoch innerhalb weniger Minuten nach Entfernung des Wattebausches vollständig verschwindet, ohne dass Spuren zurückbleiben oder eine Erweichung des Lakkes festzustellen wäre.

**Patentansprüche**

1. Verfahren zur Herstellung von wässrigen Lösungen oder Dispersionen von Polyurethanen durch Umsetzung von chemisch eingebaute hydrophile Gruppierungen und/oder externe, nicht chemisch gebundene Emulgatoren enthaltenden, mindestens 2 freie Isocyanatgruppen aufweisenden Präpolymeren mit Kettenverlängerungsmitteln in wässriger Phase, dadurch gekennzeichnet, dass man das hydrophil modifizierte und/oder einen externen Emulgator enthaltende, Isocyanatgruppen aufweisende Präpolymer in Abwesenheit von Wasser mit Azinen und/oder Hydrazonen vermischt und anschliessend dieses Gemisch mit Wasser vermischt.

2. Verfahren gemäss Anspruch 1, dadurch gekennzeichnet, dass Art und Mengenverhältnisse der Reaktionspartner so gewählt werden, dass für jede Isocyanatgruppe des Isocyanatgruppen aufweisenden Präpolymeren 0,25 bis 1,5 gegenüber Isocyanatgruppen reaktionsfähige zumindest teilweise blockierte hydrazinische $NH_2$-Gruppen vorliegen.

3. Verwendung der gemäss Anspruch 1 und 2 erhältlichen Lösungen oder Dispersionen zur Herstellung von Überzügen, Lacken und Beschichtungen.

**Patent Claims**

1. Process for the preparation of aqueous solutions or dispersions of polyurethanes by reacting prepolymers containing chemically incorporated hydrophilic groupings and/or external emulsifiers which are not chemically bonded, and having at least 2 free isocyanate groups, with chain-lengthening agents in an aqueous phase, characterised in that the prepolymer which is hydrophilically modified and/or contains an external emulsifier and which has isocyanate groups is mixed with azines and/or hydrazones in the absence of water, and this mixture is then mixed with water.

2. Process according to Claim 1, characterised in that the nature and proportions of the reactants are chosen such that 0.25 to 1.5 hydrazinic $NH_2$ groups which are reactive towards isocyanate groups and are at least partially blocked are present for each isocyanate group of the prepolymer containing isocyanate groups.

3. Use of the solutions or dispersions obtainable according to Claims 1 and 2 for the production of coverings, lacquers and coatings.

**Revendications**

1. Procédé de préparation de solutions ou dispersions aqueuses de polyuréthannes par réaction de prépolymères portant au moins deux groupes isocyanate libre, contenant des groupements hydrophiles incorporés chimiquement et/ou des agents émulsionnants externes non fixés chimiquement, avec des agents d'allongement des chaînes en phase aqueuse, ce procédé se caractérisant en ce que l'on mélange le prépolymère portant des groupes isocyanate, à modification hydrophile, et/ou contenant un agent émulsionnant externe, en l'absence d'eau, avec des azines et/ou des hydrazones, et on ajoute ensuite de l'eau au mélange obtenu.

2. Procédé selon la revendication 1, caractérisé en ce que l'on choisit la nature et les proportions relatives des composants de manière à disposer de 0,25 à 1,5 groupe $NH_2$ hydrazinique réactif avec les groupes isocyanate et bloqué en partie au moins par groupe isocyanate du prépolymère contenant des groupes isocyanate.

3. Utilisation des solutions ou dispersions obtenues selon les revendications 1 et 2 pour l'application d'enduits, de vernis et de revêtements.